# EUROPÄISCHE PATENTANMELDUNG

(11) **EP 3 915 651 A1**
(43) Veröffentlichungstag der Anmeldung: **01.12.2021**
(21) Anmeldenummer: 20190690.6
(22) Anmeldetag: 12.08.2020
(51) Int. Cl.: A62B 23/02, A41D 13/11, B01D 39/16

(54) **ATEMSCHUTZMASKE**

(30) Priorität: 28.05.2020 EP 20177108
(71) Anmelder: Eurofilters Holding N.V., 3900 Overpelt (BE)
(72) Erfinder: Sauer, Ralf, 3900 Overpelt (BE); Schultink, Jan, 3900 Overpelt (BE)
(74) Vertreter: Grünecker Patent- und Rechtsanwälte PartG mbB

(57) **Zusammenfassung**

Die Erfindung betrifft eine Atemschutzmaske (1) umfassend ein Filtermaterialstück (2) aus einem luftdurchlässigen Material und wenigstens ein Befestigungsband (3), wobei das luftdurchlässige Material (2) mindestens eine Lage (6,7) eines Vliesstoffes, der Fasern umfasst oder hieraus besteht, die aus einem rezyklierten Kunststoff oder mehreren rezyklierten Kunststoffen gebildet sind, und wobei das wenigstens eine Befestigungsband (3) zur Befestigung der Atemschutzmaske (1) am Kopf ausgebildet ist.

## Beschreibung

Die Erfindung betrifft eine Atemschutzmaske.

Atemschutzmasken bedecken regelmäßig Mund und Nase des Trägers mit einem Filtermaterial und dienen zu dessen Schutz vor in der Luft enthaltenen Schadstoffen und zum Schutz der Umgebung vor ausgeatmeten Bakterien und Viren. Insofern umfasst der Begriff unter anderem insbesondere einen Mund-Nasen-Schutz, medizinische Gesichtsmasken und filtrierende Halbmasken.

Das verwendete Filtermaterial besteht heutzutage im Allgemeinen aus einem Vliesstoff, der aus Kunststoff hergestellt wird. Viele Atemschutzmasken sind für den Einmalgebrauch gedacht und werden danach entsorgt.

Angesichts des immer weiter steigenden Bedarfs an Atemschutzmasken führt dies zu einer großen Menge an Kunststoffabfällen.

Angesichts dessen besteht die der Erfindung zugrundeliegende Aufgabe darin, eine in ökologischer Hinsicht verbesserte Atemschutzmaske mit guten Filter- bzw. Schutzeigenschaften bereit zu stellen.

Diese Aufgabe wird durch eine Atemschutzmaske gemäß Anspruch 1 gelöst.

Die Erfindung betrifft eine Atemschutzmaske umfassend ein Filtermaterialstück aus einem luftdurchlässigen Material und wenigstens ein Befestigungsband,
wobei das luftdurchlässige Material mindestens eine Lage eines Vliesstoffes der Fasern umfasst oder hieraus besteht, die aus einem rezyklierten Kunststoff oder mehreren rezyklierten Kunststoffen gebildet sind, und
wobei das wenigstens eine Befestigungsband zur Befestigung der Atemschutzmaske am Kopf ausgebildet ist
Der für die Zwecke der vorliegenden Erfindung verwendete Begriff "rezyklierter Kunststoff" ist dabei synonym zu verstehen zu Kunststoff-Rezyklaten. Ein rezyklierter Kunststoff bzw. ein Kunststoff-Rezyklat wird aus dem Recycling von Produktions-, Verarbeitungs- (Pre-Consumer) oder Post-Consumer-Abfällen gewonnen. Die Aufbereitung zu Rezyklat erfolgt typischerweise in Form von Mahlgütern, Regranulaten, Regeneraten bzw. Compounds, Agglomeraten oder Kompaktaten.

Das hergestellte Rezyklat findet erneut Einsatz in der Verarbeitung zu Kunststoffprodukten. Rezyklierter Kunststoff ist also ein Sekundärrohstoff. Hinsichtlich der Charakterisierung von Kunststoffabfällen wird auf die Norm DIN EN 15347:2007 verwiesen.

Der Filterteil der Atemschutzmaske in Form des Filtermaterialstücks ist dementsprechend aus einem luftdurchlässigen Material, das ein- oder mehrlagig aufgebaut sein kann. Mindestens eine dieser Lagen ist dabei ein Vliesstoff, der rezyklierte Kunststoffe umfasst und insbesondere aus rezyklierten Kunststoffen gebildet ist.

Im Unterschied zu den aus dem Stand der Technik bekannten Atemschutzmasken wird somit weniger oder gar kein frisches/reines (virgin) Kunststoffmaterial (Primär-Material) zur Herstellung der des Filtermaterialstücks der Atemschutzmaske zugrundeliegenden Vliesstoffen verwendet, sondern es gelangen überwiegend oder ausschließlich Kunststoffe zum Einsatz, die bereits in Verwendung waren und durch entsprechende Recycling-Verfahren wiedergewonnen wurden (Sekundär-Material). Derartige Atemschutzmasken sind in ökologischer Hinsicht deutlich vorteilhaft, da sie in hohem Maße rohstoffneutral hergestellt werden können.

Im Sinne der vorliegenden Erfindung bezeichnet ein "Vliesstoff" ein Wirrgelege, das einen Verfestigungsschritt (Vliesbindeschritt) durchlaufen hat, so dass es eine ausreichende Festigkeit aufweist, um insbesondere maschinell (also in industriellem Maßstab) zu Rollen auf- bzw. abgewickelt zu werden. Die für ein derartiges Aufwickeln minimal erforderliche Bahnspannung beträgt 0,044 N/mm. Die Bahnspannung sollte nicht höher als 10 % bis 25 % der Mindesthöchstzugkraft (gemäß DIN EN 29073-3:1992-08) des aufzuwickelnden Materials betragen. Daraus resultiert eine Mindesthöchstzugkraft für ein aufzuwickelndes Material von 8,8 N pro 5 cm Streifenbreite.

Ein "Faservlies" (oder kurz nur "Vlies" genannt) entspricht einem Wirrgelege, das jedoch keinen Verfestigungsschritt durchlaufen hat, so dass im Gegensatz zu einem Vliesstoff ein derartiges Wirrgelege keine ausreichende Festigkeit aufweist, um zum Beispiel maschinell zu Rollen auf- bzw. abgewickelt zu werden.

Der Begriff "Vliesstoff" ("Nonwoven") wird in anderen Worten gemäß der Definition nach ISO Standard ISO 9092:1988 bzw. CEN Standard EN 29092 verwendet. Details zur Verwendung der darin beschriebenen Definitionen und/oder Verfahren lassen sich auch dem Lehrbuch "Vliesstoffe", H. Fuchs, W. Albrecht, WILEY-VCH, 2012, entnehmen.

Unter "Fasern" werden sowohl Fasern endlicher Länge (bspw. Stapelfasern) als auch Fasern the-oretisch unendlicher Länge, d.h. Endlosfasern oder Filamente, verstanden.

In einer Ausführungsform sind die Fasern eines oder mehrerer Vliesstoffe, die im luftdurchlässigen Material des Filtermaterialstücks bzw. des Filterteils der Atemschutzmaske beinhaltet sind, aus einem einzigen rezyklierten Kunststoffmaterial gebildet.

Alternativ ist es jedoch ebenso möglich, wenn die Fasern eines oder mehrerer Vliesstoffe aus unterschiedlichen Materialien gebildet sind, von denen zumindest eines einen rezyklierten Kunststoff darstellt. Hierbei sind insbesondere zwei Ausführungsformen denkbar:
Einerseits kann es sich um ein Gemisch mindestens zweier Fasertypen handeln, beispielsweise um Fasergemische, die aus zumindest zwei unterschiedlichen rezyklierten Kunststoffen gebildet sind.

Andererseits ist es ebenso möglich, dass der Vliesstoff Bikomponentenfasern (BiKo-Fasern) beinhaltet oder hieraus gebildet ist. Diese können aus einem Kern, sowie einem den Kern umhüllenden Mantel bestehen. Kern und Mantel sind dabei aus unterschiedlichen Materialien gebildet. Neben Kern/Mantel-Bikomponentenfasern kommen auch die anderen gebräuchlichen Varianten von Bikomponentenfasern (z. B. Side by Side) in Frage.

Die Bikomponentenfasern können als Stapelfasern vorliegen oder als Extrusionsvliesstoff (beispielsweise als Meltblown-, Spunbond- oder Spun-blown-Vliesstoff) ausgebildet sein, so dass die Bikomponentenfasern theoretisch unendliche Länge aufweisen und sogenannte Filamente darstellen. Bei derartigen Bikomponentenfasern ist es von Vorteil, wenn zumindest der Kern aus einem rezyklierten Kunststoff gebildet ist, für den Mantel kann beispielsweise auch ein Virgin-Kunststoff, aber alternativ ebenso ein anderer rezyklierter Kunststoff eingesetzt werden.

Insbesondere vorteilhaft sind Bikomponentenfasern, deren Kern aus rezykliertem Polyethylenterephthalat (rPET) oder rezykliertem Polypropylen (rPP) besteht, die Hülle besteht dabei aus Polypropylen, bei dem es sich um "virgin" oder ebenso um ein rezykliertes Material handeln kann.

Insbesondere wenn die Bikomponentenfasern als Bindefasern eingesetzt werden, können sowohl Kern als auch Mantel aus rezyklierten Kunststoffen bestehen. Wenn die Bikomponentenfasern im Meltblown vorliegen, ist der Mantel vorzugsweise aus virgin Material, um zuverlässig persistent aufladbar zu sein.

Für die Vliesstoffe für die Zwecke der vorliegenden Erfindung ist es möglich, dass es sich hierbei um trockengelegte, nassgelegte oder Extrusionsvliesstoffe handelt. Demzufolge können die Fasern der Vliesstoffe endliche Länge aufweisen (Stapelfasern), aber auch theoretisch unendliche Länge aufweisen (Filamente).

Die Atemschutzmaske kann insbesondere aus dem Filtermaterialstück und dem wenigstens einen Befestigungsband bestehen. Das Befestigungsband kann mit dem Filtermaterialstück verschweißt oder verklebt sein. Gemäß einer Alternative kann das Befestigungsband auch mit dem Filtermaterialstück formschlüssig verbunden sein, beispielsweise mittels eines Niets.

Das Filtermaterialstück bildet den Filterteil der Atemschutzmaske, mit dem die ein- und ausgeatmete Luft gefiltert wird.

Der rezyklierte Kunststoff kann dabei aus der Gruppe bestehend aus rezyklierten Polyestern, insbesondere rezykliertem Polyethylenterephthalat (rPET), rezykliertem Polybutylenterephthalat (rPBT), rezyklierter Polymilchsäure (rPLA), rezykliertem Polyglycolid und/oder rezykliertem Polycaprolacton; rezyklierten Polyolefinen, insbesondere rezykliertem Polypropylen (rPP), rezykliertem Polyethylen und/oder rezykliertem Polystyrol (rPS); rezykliertem Polyvinylchlorid (rPVC), rezyklierten Polyamiden sowie Mischungen und Kombinationen hiervon ausgewählt sei.

Für viele Kunststoff-Rezyklate bestehen einschlägige internationale Normen. Für PET-Kunststoff-Rezyklate ist beispielsweise die DIN EN 15353:2007 einschlägig. PS-Rezyklate werden in DIN EN 15342:2008 näher beschrieben. PE-Rezyklate werden in DIN EN 15344:2008 behandelt. PP-Rezyklate werden in DIN EN 15345:2008 charakterisiert. PVC-Rezyklate sind in DIN EN 15346:2015 näher bezeichnet. Zum Zwecke der entsprechenden speziellen Kunststoffrezyklate macht sich die vorliegende Patentanmeldung die Definitionen dieser internationalen Normen zu Eigen. Die Kunststoff-Rezyklate können dabei aus metallisierten oder nicht metallisierten Rohstoffen gewonnen sein. Ein Beispiel für nicht metallisierte Rohstoffe sind aus PET-Getränkeflaschen zurückgewonnene Kunststoffflakes oder -chips. Ebenso können die Rohstoffe metallisiert sein, z.B. wenn sie aus metallischen Kunststofffolien erhalten wurden, insbesondere metallisierten PET-Folien (MPET).

Bei dem rezyklierten Kunststoff handelt es sich insbesondere um rezykliertes Polyethylenterephthalat (rPET), das beispielsweise aus Getränkeflaschen, insbesondere aus sog. Bottleflakes, also Stücke gemahlener Getränkeflaschen, erhalten wurde.

Alternativ kann der rezyklierte Kunststoff rezykliertes Polypropylen (rPP) sein. Das rPP kann sowohl ein physikalisch als auch ein chemisch rezykliertes rPP Material sein. Physikalisch rezyklierte rPP Materialien werden z.B. durch physikalisches Abrennen von PP-Material aus Müll, wie Haushaltsmüll, gewonnen. Insbesondere ist es aber bevorzugt, dass das rPP Material ein chemisch rezykliertes Material ist. Dabei wird in Ausführungsformen das rPP durch Depolymersiation von "virgin" PP in Propan, Dehydrierung von Propan in Propen und anschließender Polymerisation des so hergestellten Propens hergestellt. Chemisch rezykliertes rPP-Material hat im Vergleich zu physikalisch hergestelltem rPP Material den Vorteil, dass die chemischen und mechanischen Eigenschaften wie beim "virgin" PP gezielt einstellbar sind. Insbesondere können bei chemisch rezykliertem rPP Material Eigenschaften erzielt werden, die mit denen von "virgin" PP vergleichbar sind. Auch können im Gegensatz zu physikalisch rezykliertem rPP Materialverunreinigungen vermieden werden.

Verfahren zum Herstellen von chemisch rezykliertem rPP werden in der Regel großtechnisch umgesetzt und sind im Stand der Technik bekannt. Beim Depolymerisationsprozess wird in Ausführungsformen "virgin" PP aus Kunststoffabfällen (wie z.B. Verpackungsmaterialien) oder Altöl thermisch und/oder chemisch aufbereitet und zu Propan umgewandelt. Insbesondere kann das durch Depolymerisation hergestellte Propan über die NEXBTL™ Technologie der Fa. Neste hergestellt werden. Beim anschließenden Dehydrierungsprozess wird das erhaltene Propan katalytisch dehydriert und zu Propen umgewandelt. Zum Beispiel kann in Ausführungsformen die Dehydrierung über den Oleflex-Prozess der Fa. UOP erfolgen. Dabei wird ein propanhaltiges Gas auf 600-700 °C vorgeheizt und in einem Fließbett-Dehydrierreaktor an einem Platin-Katalysator mit Aluminiumoxid als Träger dehydriert. Beim Polymerisationsschritt wird das Propen zu Polypropylen, d.h. rPP, polymerisiert. Dabei können herkömmliche katalytische Prozesse, wie z.B. Ziegler-Natta-Verfahren oder Metallocen-katalysierte Verfahren eigesetzt werden. Insbesondere bevorzugt ist, dass das rPP ein kommerziell erhältliches Polypropylen ist, das gemäß der Ever Minds™ Technologie der Fa. Borealis produziert wurde.

Die rezyklierten Kunststoffe, insbesondere das rezyklierte PET und das rezyklierte PP, sowohl in der metallisierten, als auch in der nicht metallisierten Fassung, können zu den entsprechenden Fasern versponnen werden, aus denen die entsprechenden Stapelfasern bzw. Meltblown- oder Spunbond-Vliesstoffe für die Zwecke der vorliegenden Erfindung hergestellt werden können. Die Verwendung von chemisch rezykliertem rPP hat insbesondere den Vorteil, dass es sich zu Meltblown- oder Spunbond-Vliesstoffen verarbeiten lässt, die hervorragende Eigenschaften besitzen. In diesem Zusammenhang ist zum Beispiel sehr vorteilhaft, dass Meltblown- oder Spunbond-Vliesstoffe, die aus diesem rPP Material hergestellt wurden, sich besonders günstig elektrostatisch aufladen lassen. Ein derart erhaltenes rPP-Material weist nach einer Corona-Behandlung eine hervorragende Haftung zu allen anderen Schichten/Materialien der vorliegenden Erfindung auf. Dies ist insbesondere dadurch erklärbar, dass die Aufladbarkeit und die Ladungspersistenz eines solchen rPP-basieren Materials gut sind und mit den Eigenschaften eines Materials vergleichbar sind, das aus "virgin" PP hergestellt wurde.

Die Lage des Vliesstoffes, der Fasern umfasst oder hieraus besteht, die aus einem rezyklierten Kunststoff oder mehreren rezyklierten Kunststoffen gebildet sind, kann elektrostatisch aufgeladen sein. Das elektrostatische Aufladen der Vliesstofflage kann durch Coronaladung oder Hydrocharging erfolgen. Insbesondere Fasern, die aus dem oben beschriebenen chemisch rezyklierten rPP-Material gebildet, also schmelzgesponnen wurden, erlauben damit eine ökologisch vorteilhafte Ausführungsform bei exzellenten Filtereigenschaften.

In einer Variante kann das luftdurchlässige Material einlagig aufgebaut sein, also aus genau einer Lage eines Vliesstoffs wie beschrieben aufgebaut sein, d.h. daraus bestehen. Der Vliesstoff kann ein Spun-Blown sein, insbesondere aus Bikomponentenfasern. Wie oben beschrieben kann der Kern aus einem rezyklierten Kunststoff gebildet sein, für den Mantel kann beispielsweise ein Virgin-/Primär-Kunststoff verwendet werden. Der Vliesstoff kann kalandriert sein. Dies erhöht die Festigkeit.

Ein Spun-Blown-Vliesstoff kann elektrostatisch (z.B. durch Coronaladung oder Hydrocharging) aufgeladen sein.

In einer anderen Variante kann das luftdurchlässige Material mehrlagig aufgebaut sein, wobei mindestens eine, mehrere oder sämtliche der Lagen einen Vliesstoff umfassen oder hieraus gebildet sind, wobei der Vliesstoff Fasern umfasst oder hieraus besteht, die einen rezyklierten Kunststoff oder mehrere rezyklierte Kunststoffe umfassen oder daraus gebildet sind. Eine spezifische Wahl der einzelnen Vliesstoff- und deren Parameter ermöglicht eine kontrollierte Einstellung der Filtereigenschaften der Atemschutzmaske.

Bei einem mehrlagigen Aufbau können die Lagen entlang ihrer Kanten umlaufend miteinander verschweißt sein.

Die vorliegende Erfindung erfasst mehrere besonders bevorzugte Möglichkeiten der mehrlagigen Ausgestaltung des luftdurchlässigen Materials, die nachfolgend vorgestellt werden. Die Mehrzahl dieser Lagen kann mittels Schweißverbindungen miteinander verbunden sein. Die Lagen können untereinander auch verklebt sein.

Der Filterteil bzw. das Filtermaterialstück der (fertigen, aber unbenutzten) Atemschutzmaske kann (in Draufsicht) eine polygonale, insbesondere im wesentlichen rechteckige Form haben. Dies gilt insbesondere auch für den Fall eines Filtermaterialstücks mit Falten. Der Filterteil bzw. das Filtermaterialstück kann eine dreidimensional geformte Form, beispielsweise aufgrund räumlicher Umformung, aufweisen. Insbesondere letzteres erlaubt eine genauere Anpassung an die Gesichtsform, was zu einem geringeren Leckvolumenstrom führt.

Gemäß einer Ausführungsform umfasst das luftdurchlässige Material mindestens eine Stützlage und mindestens eine Feinfilterlage, wobei mindestens eine oder sämtliche der Stützlagen rezyklierte Kunststoffe aufweisen oder daraus gebildet sind und/oder mindestens eine oder sämtliche der Feinfilterlagen Vliesstoffe sind, die einen rezyklierten Kunststoff oder mehrere rezyklierten Kunststoffe aufweisen oder daraus gebildet sind.

Insbesondere die Feinfilterlage ermöglicht die gewünschte Schutz- und Filterfunktion der Atemschutzmaske.

Ein mehrlagiges luftdurchlässiges Material kann eine Meltblownlage zwischen zwei Stütz- bzw. Trägerlagen aufweisen. Dabei ermöglicht die Meltblownlage, die die Feinfilterlage darstellt, eine hohe Filterleistung. Die Meltblownlage kann elektrostatisch (z.B. durch Coronaladung oder Hydrocharging) aufgeladen sein.

Eine oder beide Trägerlagen können ein Vliesstoff, insbesondere ein Spunbond oder ein Spun-blown sein. Alternativ können eine oder beide Trägerlagen ein Netz (Netting) sein. Das Netz kann dabei Eigenschaften aufweisen, wie sie in der EP 2 011 556 A1 beschrieben sind, die hiermit durch Bezugnahme aufgenommen wird.

Eine Stützlage (manchmal auch "Trägerlage" oder "Verstärkungslage" genannt) im Sinne der vorliegenden Erfindung ist dabei eine Lage, die dem mehrlagigen Verbund des Filtermaterialstücks die notwendige mechanische Festigkeit verleiht. Hierunter wird ein offener, poröser Vliesstoff bzw. ein Nonwoven mit leichtem Flächengewicht bezeichnet. Eine Stützlage dient unter anderem dazu, andere Lagen oder Schichten zu stützen. Die Stützlage, wie auch jede andere Lage des Filtermaterials kann gegebenenfalls auch elektrostatisch aufgeladen sein, unter der Voraussetzung, dass das Material geeignete dielektrische Eigenschaften aufweist.

Eine Feinfilterlage dient der Erhöhung der Filtrationsleistung des mehrlagigen Filtermaterialstücks durch Einfangen von Partikeln, die beispielsweise durch die Stützlage hindurch gelangen. Zur weiteren Erhöhung der Abscheideleistung kann die Feinfilterlage bevorzugt elektrostatisch (z.B. durch Coronaentladung oder Hydrocharging) aufgeladen werden.

Bei den Atemschutzmasken kann jede Stützlage ein Spinnvlies sein, vorzugsweise mit einer Grammatur von 5 bis 80 g/m², weiter bevorzugt von 10 bis 50 g/m², weiter bevorzugt von 15 bis 30 g/m² und/oder vorzugsweise mit einem Titer der das Spinnvlies bildenden Filamente im Bereich von 0,5 dtex bis 15 dtex.

Das luftdurchlässige Material kann dabei vorzugsweise ein bis drei Stützlagen umfassen.

Im Falle des Vorhandenseins zweier Stützlagen beträgt die Gesamtgrammatur der Summe aller Stützlagen vorzugsweise 10 bis 200 g/m², weiter bevorzugt 15 bis 150 g/m², weiter bevorzugt 20 bis 100 g/m², weiter bevorzugt 30 bis 90 g/m², insbesondere 40 bis 70 g/m².

Insbesondere ist es bevorzugt, dass sämtliche Stützlagen aus einem rezyklierten Kunststoff oder mehreren rezyklierten Kunststoffen, insbesondere aus rPET oder rPP, gebildet sind.

Gemäß einer weiteren vorteilhaften Ausgestaltungsform ist jede Feinfilterlage ein Extrusionsvliesstoff, insbesondere ein Meltblown-Vliesstoff, vorzugsweise mit einer Grammatur von 10 bis 80 g/m², weiter bevorzugt 15 bis 50 g/m², insbesondere 20 bis 40 g/m².

Hierbei ist es möglich, dass das luftdurchlässige Material 1 bis 5 Feinfilterlagen umfasst.

Im Falle des Vorhandenseins mindestens zweier Feinfilterlagen beträgt die Gesamtgrammatur der Summe aller Feinfilterlagen vorzugsweise 10 bis 80 g/m², weiter bevorzugt 15 bis 50 g/m², insbesondere 20 bis 40 g/m².

Insbesondere ist es bevorzugt, wenn mindestens eine, bevorzugt sämtliche Feinfilterlagen einen rezyklierten Kunststoff oder mehrere rezyklierte Kunststoffe, insbesondere umfassend ein rPP, aufweisen oder daraus gebildet sind. Dabei kann die mindestens eine Feinfilterlage ein Bikomponenten-Meltblown sein, wobei der Kern der Bikomponentenfasern aus einem rPP gebildet ist.

Zur Erhöhung der Filtrationsleistung kann mindestens eine, bevorzugt sämtliche Feinfilterlagen elektrostatisch aufgeladen sein.

Eine Ausführungsform des Aufbaus des luftdurchlässigen Materials für die erfindungsgemäße Atemschutzmaske sieht den nachfolgend beschriebenen mehrlagigen Aufbau mit einer Lagenfolge vor:
eine Stützlage, eine oder zwei Feinfilterlagen sowie eine weitere Stützlage.

Insbesondere wenn die Stützlage als Spunbond-Vliesstoff und die Feinfilterlage als Meltblown-Vliesstoff aufgebaut sind, liegt dann ein SMS- bzw. SMMS-Aufbau vor.

Mindestens eine der Lagen umfasst dabei mindestens ein rezykliertes Kunststoffmaterial, insbesondere rPET oder rPP. Besonders bevorzugt sind zumindest sämtliche Stützlagen aus rezyklierten Kunststoffen gebildet.

Bei der Atemschutzmaske kann das luftdurchlässige Material eine Meltblown-Lage aus Bikomponentenfasern mit einem Kern/Mantel-Aufbau umfassen, wobei der Kern aus rPP und der Mantel aus virgin PP gebildet ist. Insbesondere kann der Kernanteil wenigstens 60%, wenigstens 80% oder wenigstens 90% der Bikomponentenfasern ausmachen. Dies erlaubt einen hohen Rezyklatanteil bei guter elektrostatischer Aufladbarkeit, wobei sich letzteres insbesondere aus der Verwendung von virgin PP für den Mantel ergibt.

In einer anderen bevorzugten Ausführungsform kann das luftdurchlässige Material eine Meltblown-Lage aus Bikomponentfasern mit einem Kern/Mantel-Aufbau umfassen, wobei sowohl der Kern als auch der Mantel aus rPP gebildet sind. Insbesondere bei der Verwendung von chemisch rezykliertem rPP besitzt eine solche Meltblown-Lage eine hervorragende Haftung zu den anderen Lagen der Atemschutzmaske, insbesondere nach vorhergehender Coronabehandlung oder Hydrocharging. Diese ist dadurch zu erklären, dass das dieses spezielle rPP eine hervorragende Aufladbarkeit und Ladungspersistenz besitzt, die mit "virgin" PP vergleichbar sind. Somit kann eine Atemschutzmaske hergestellt werden, die zu 100% Rezyklat besteht, und demnach z.B. das Prüfzeichen "blauer Engel" erhalten kann. Weiter können so Spinnvlieslagen hergestellt werden, die eine sortenreine PP-Maske ermöglichen, die aus Rezyklat besteht und alle Eigenschaften einer Maske aus virgin-Material aufweist.

Die Erfindung stellt weiterhin ein Verfahren zur Herstellung einer Atemschutzmaske, insbesondere einer der beschriebenen Atemschutzmasken, umfassend ein Filtermaterialstück aus einem luftdurchlässigen Material bereit, mit den Schritten:
Bereitstellen eines ersten Vliesstoffmaterials,
bereichsweises Verdichten des ersten Vliesstoffmaterials,
Verschweißen des ersten Vliesstoffmaterials mit einem zweiten Vliesstoffmaterial im verdichteten Bereich.

Damit wird der Bereich, in dem die beiden Vliesstoffmaterialien verschweißt werden, also im (späteren) Schweißbereich, vorab verdichtet bzw. vorverdichtet. Es hat sich herausgestellt, dass ein derartiges zweistufiges Verbindungsverfahren eine hohe mechanische Festigkeit bei kurzen Verschweißzeiten ergibt. Somit ermöglicht dieses Verfahren hohe Taktzahlen bei der Herstellung ohne Einbußen bei der Festigkeit der Schweißverbindungen.

Mit dem Verschweißen der Vliesstoffmaterialien wird das Filtermaterialstück aus luftdurchlässigem Material, insbesondere der oben beschriebenen Atemschutzmaske erhalten. Eines oder beide Vliesstoffmaterialien bildet dabei eine der beschriebenen Lagen eines Vliesstoffs für die Atemschutzmaske.

Vor dem Verschweißen der beiden Vliesstoffmaterialien kann das zweite Vliesstoffmaterial bereichsweise verdichtet werden. Grundsätzlich ist es nicht erforderlich, beide miteinander zu verbindenden Vliesstoffmaterialien vorzuverdichten. Allerdings führt dies zu einer weiteren Verbesserung der Festigkeit bzw. einer weiteren möglichen Verkürzung der Verschweißzeit. Beim Verschweißen liegen dann die verdichteten Bereiche der beiden Vliesstoffmaterialien vorzugsweise über- bzw. aufeinander.

Das Verdichten kann durch Ultraschallschweißen, thermisches Schweißen oder durch Druckbeaufschlagung erfolgt. Die Druckbeaufschlagung kann dabei insbesondere ohne weiteren Energieeintrag bspw. in Form von Ultraschall- oder thermischer Energie, also bei Raumtemperatur erfolgen.

Das Verschweißen der Vliesstoffmaterialien kann mittels Ultraschallschweißen oder thermischem Schweißen erfolgt.

Der Bereich in dem bereichsweise verdichtet wird (Vorverdichtbereich) kann die gleichen Abmessungen, insbesondere in der Ebene des Vliesstoffmaterials, wie der (spätere) Schweißbereich haben. Vorzugsweise kann der Vorverdichtbereich größer als der Schweißbereich sein. Damit kann sichergestellt werden, dass trotz Toleranzen in den Prozessparametern das Verschweißen in dem vorverdichteten Bereich stattfindet, dass also beispielsweise die Ultraschallsonotrode für das Verschweißen den vorverdichteten Bereich trifft.

Die beiden Vliesstoffmaterialien können zusammenhängend ausgebildet sind. Dabei können sie als ein gemeinsames Vliesstoffmaterialstück ausgebildet sein. In diesem Fall erfolgt das Verschweißen nach einem Falten bzw. Zusammenlegen des einen gemeinsamen Vliesstoffstoffmaterialstücks. Dabei werden, falls beide Vliesstoffmaterialien bereichsweise verdichtet werden, die verdichteten Bereiche auf- bzw. übereinandergelegt.

Gemäß einer Alternative können die beiden Vliesstoffmaterialien als separate oder getrennte Materialstücke ausgebildet sein.

Bei einer Ausbildung in Form eines zusammenhängenden Vliesstoffmaterialstücks kann das bereichsweise Verdichten beider Vliesstoffmaterialien vor oder nach einem Falten bzw. Zusammenlegen des einen Vliesstoffmaterialstücks erfolgen.Bei den beschriebenen Atemschutzmasken kann das wenigstens eine Befestigungsband einen rezyklierten Kunststoff umfassen oder aus einem oder mehreren rezyklierten Kunststoffen gebildet sein. Dies erlaubt eine weitere Erhöhung des Rezyklatanteils der gesamten Atemschutzmaske.

Das wenigstens eine Befestigungsband kann eine Lage aus einer Folie und/oder eine Lage eines Vliesstoffs, beispielsweise eines Meltblowns, umfassen oder hieraus bestehen. Der Vliesstoff und/oder das Laminat aus den beiden Lagen kann ein gekrimptes Material sein (z.B. mittels des Micrex-Mikro-Krepp-Verfahrens erhalten). Alternativ oder zusätzlich kann als Material für den Vliesstoff Vistamaxx (Hersteller: ExxonMobil Chemical) verwendet werden.

Das wenigstens eine Befestigungsband kann mehrlagig aufgebaut sein, wobei das Befestigungsband eine Lage aus einer Folie und eine Lage eines Vliesstoffs, insbesondere eines Meltblowns, umfasst oder hieraus besteht.

Bei einem Befestigungsband in Form eines Laminats umfassend eine Folie und einen Vliesstoff kann die Folie, insbesondere in Form einer Gießfolie, direkt auf den Vliesstoff auflaminiert sein. Damit ist kein zusätzlicher Klebstoff erforderlich.

Das wenigstens eine Befestigungsband kann ein thermoplastisches Polymer, insbesondere ein rezykliertes thermoplastisches Polymer, umfassen oder hieraus gebildet sein. Das thermoplastische Polymer kann insbesondere ein thermoplastisches Elastomer sein. Es kann sich beispielsweise um thermoplastisches Polyurethan (TPU) oder um Vistamaxx handeln. So kann das Befestigungsband in Form eines Laminats aus einer TPU-Folie und einem TPU-Meltblown, TPU-Spunbond oder TPU Spun-blown ausgebildet sein. Dieser Aufbau ergibt eine gute Elastizität bei hoher Stabilität des Befestigungsbands. Außerdem kann ein solches Befestigungsband in vorteilhafter Weise mit dem Filtermaterialstück verschweißt werden.

Das Befestigungsband kann zu einer Kordel gedreht oder verdrillt ausgebildet sein. Dies erhöht den Tragekomfort. Dabei ist es möglich, die Verdrillung durch eine thermische Fixierung (z. B. Ultraschallschweißung) daran zu hindern, sich wieder zurückzudrehen.

Die beschriebenen Atemschutzmasken können (genau) zwei Befestigungsbänder umfassen.

Ein oder mehrere Befestigungsbänder können derart ausgebildet sein, um den Hinterkopf eines Trägers (Nutzers) geführt zu werden. Alternativ können ein oder mehrere Befestigungsbänder derart ausgebildet sein, um ein Ohr eines Trägers (Nutzers) geführt zu werden.

Das wenigstens eine Befestigungsband kann als geschlossenes Band ausgeführt sein. Dies bedeutet, dass das entsprechende Befestigungsband kein loses oder offenes Ende aufweist. Dies kann beispielsweise dadurch erreicht werden, dass beide Enden eines Befestigungsbands mit dem Filterteil bzw. dem Filtermaterialstück verbunden sind. Alternativ kann beispielsweise das entsprechende Band als solches geschlossen ausgeführt sein; es kann also eine Ring- oder Schlaufenform aufweisen.

Gemäß einer Alternative kann die Atemschutzmaske wenigstens zwei, insbesondere vier Befestigungsbänder mit offenem bzw. losem Ende aufweisen. Dies bedeutet, dass jeweils (nur) ein Ende jedes Befestigungsbands an dem Filterteil bzw. einer Vliesstoffbahn befestigt ist. Die offenen/losen Enden von jeweils zwei Befestigungsbändern lassen sich verknoten.

Das wenigstens eine Befestigungsband kann sich über eine gesamte Länge des Filtermaterialstücks bzw. des Filterteils erstrecken. Dies erlaubt, das wenigstens eine Befestigungsband während der Fertigung mit dem luftdurchlässigen Material mitlaufen zu lassen und gemeinsam mit diesem (an den Enden des Filtermaterialstücks) zu schneiden.

Insbesondere können zwei Befestigungsbänder vorgesehen sein, die sich über eine gesamte Länge des Filtermaterialstücks bzw. Filterteils erstrecken. Vorzugsweise sind diese zwei Befestigungsbänder auf der gleichen Seite des luftdurchlässigen Materials bzw. Filtermaterialstücks und entlang zweier gegenüberliegender Kanten des Filtermaterialstücks angeordnet.

Das wenigstens eine Befestigungsband kann an seinen zwei Endbereichen mit dem luftdurchlässigen Material verbunden, insbesondere verschweißt sein.

Die zuvor beschriebenen Atemschutzmasken können einen biegbaren Nasensteg umfassen. Dies erlaubt eine Optimierung der Passform, insbesondere einen besseren Abschluss der Atemschutzmaske im Augen- und Nasenbereich, sowie einen verbesserten Halt.

In diesem Fall kann die Atemschutzmaske aus dem luftdurchlässigen Material, dem wenigstens einen Befestigungsband und dem Nasensteg bestehen.

Der Nasensteg kann parallel zur nicht verschweißten Kante angeordnet sein. Er kann außen auf der Atemschutzmaske oder in eine der beiden Vliesstoffbahnen eingebettet angeordnet sein.

Der Nasensteg kann einen einfachen oder einen doppelten Draht umfassen. Der einfache oder der doppelte Draht können in einen Streifen eines Kunststoffmaterials oder eines papierbasierten Materials eingebettet sein.

Der Nasensteg kann aus Aluminium bestehen oder aus PP oder PE ohne Drahteinlage. Das Kunststoffmaterial kann aus einem rezyklierten Kunststoff gebildet sein. Die Breite des Nasenstegs kann 1 bis 10 mm betragen.

Die Länge des Nasenstegs kann 2 cm bis 25 cm, insbesondere mehr als 4 cm und/oder weniger als 10 cm betragen. Der Nasensteg kann auch sich über die gesamte Länge einer Kante des Filtermaterialstücks erstrecken. Letzteres erlaubt eine vereinfachte Herstellung, da der Nasensteg gemeinsam mit Filtermaterialstück während der Herstellung geschnitten werden kann.

Der Nasensteg kann nicht-zerstörungsfrei lösbar oder zerstörungsfrei lösbar an dem Filtermaterialstück befestigt sein. Der Nasensteg kann mit dem Filtermaterialstück verklebt oder verschweißt sein. Die Befestigung mittels Klebstoffs kann durch ein Hotmelt erfolgen. Der Nasensteg kann entlang seiner gesamten Länge kontinuierlich oder nur an einzelnen diskreten Punkten mit dem Filtermaterialstück verbunden sein.

Die zuvor beschriebenen Atemschutzmasken können als Halbmaske ausgebildet sein. Damit bedecken sie im Gebrauch Nase, Mund und Kinn des Trägers. Die zuvor beschriebenen Atemschutzmasken können als medizinische Gesichtsmasken gemäß der DIN EN 14683:2019+AC:2019 oder als filtrierende Halbmaske gemäß der DIN EN 149 ausgebildet sein.

Der Gewichtsanteil aller rezyklierten Materialien kann, bezogen auf das Gesamtgewicht der Atemschutzmaske, mindestens 60 %, insbesondere mindestens 70 %, insbesondere mindestens 80 %, insbesondere mindestens 90 %, insbesondere 95 % betragen.

Das luftdurchlässige Material der Atemschutzmaske kann gekreppt sein. Hierfür kann insbesondere das Micrex-Mikro-Krepp-Verfahren eingesetzt werden. Rein beispielhaft wird auf die WO 2007/079502 verwiesen. Die damit erzielte Erhöhung der Oberfläche führt nicht nur zu einer weicheren Anmutung; das Filtermaterialstück lässt sich auch besser der Gesichtsform anpassen und nimmt Feuchtigkeit besser auf.

Die Erfindung stellt auch eine Atemschutzmaske umfassend ein Filtermaterialstück aus einem luftdurchlässigen Material und wenigstens ein Befestigungsband bereit,
wobei das luftdurchlässige Material mindestens eine Lage eines Vliesstoffes und/oder eine Lage aus einem Faservlies umfasst und das luftdurchlässige Material gekreppt ist, und
wobei das wenigstens eine Befestigungsband zur Befestigung der Atemschutzmaske am Kopf ausgebildet ist.

Das gekreppte luftdurchlässige Material führt zu einer verbesserten Atemschutzmaske unabhängig von der Verwendung rezyklierter Kunststoffe. Für diese Atemschutzmaske sind die oben beschriebenen Charakteristika, Parameter und Eigenschaften auch ohne die rezyklierten Kunststoffe anwendbar.

Bei den zuvor beschriebenen Atemschutzmasken kann das Befestigungsband gekreppt sein. Auch hier kann insbesondere das Micrex-Mikro-Krepp-Verfahren eingesetzt werden.

Ein gekrepptes Befestigungsband erlaubt eine vorteilhafte Flexibilität für die Anpassung an unterschiedliche Kopfdurchmesser.

Weiterhin stellt die Erfindung ein Schutzkleidungsstück aus einem luftdurchlässigen Material bereit, wobei das luftdurchlässige Material mindestens eine Lage eines Vliesstoffes umfasst, der Fasern umfasst oder hieraus besteht, die aus einem rezyklierten Kunststoff oder mehreren rezyklierten Kunststoffen gebildet sind.

Bei dem Schutzkleidungsstück kann es sich beispielsweise um eine Schutzhaube, einen Schutzüberzug für Schuhe, einen Schutzumhang oder einen Schutzoverall handeln.

Das luftdurchlässige Material des Schutzkleidungsstücks kann ebenfalls die oben beschriebenen Charakteristika, Parameter und Eigenschaften aufweisen.

Zudem betrifft die vorliegende Erfindung die Verwendung eines rezyklierten Kunststoffes, insbesondere der voranstehend beschriebenen rezyklierten Kunststoffen, beispielsweise in Form von Vliesstoffen für eine Atemschutzmaske oder ein Schutzkleidungsstück, insbesondere die Herstellung einer Atemschutzmaske oder eines Schutzkleidungsstücks. Hinsichtlich der hierfür verwendbaren rezyklierten Kunststoffe oder der möglichen Ausgestaltung der Vliesstoffe wird diesbezüglich auf die voranstehenden Ausführungen verwiesen.

Die vorliegende Erfindung wird anhand der nachfolgenden beispielhaften Ausführungen unter Bezugnahme auf die Figuren näher beleuchtet, ohne die Erfindung auf die speziellen dargestellten Ausführungen zu beschränken. Dabei zeigen
- Fig. 1: schematisch eine Atemschutzmaske,
- Fig. 2: eine schematische Querschnittsansicht des Aufbaus eines Filtermaterialstücks einer Atemschutzmaske,
- Fig. 3: eine schematische Draufsicht auf eine Atemschutzmaske.

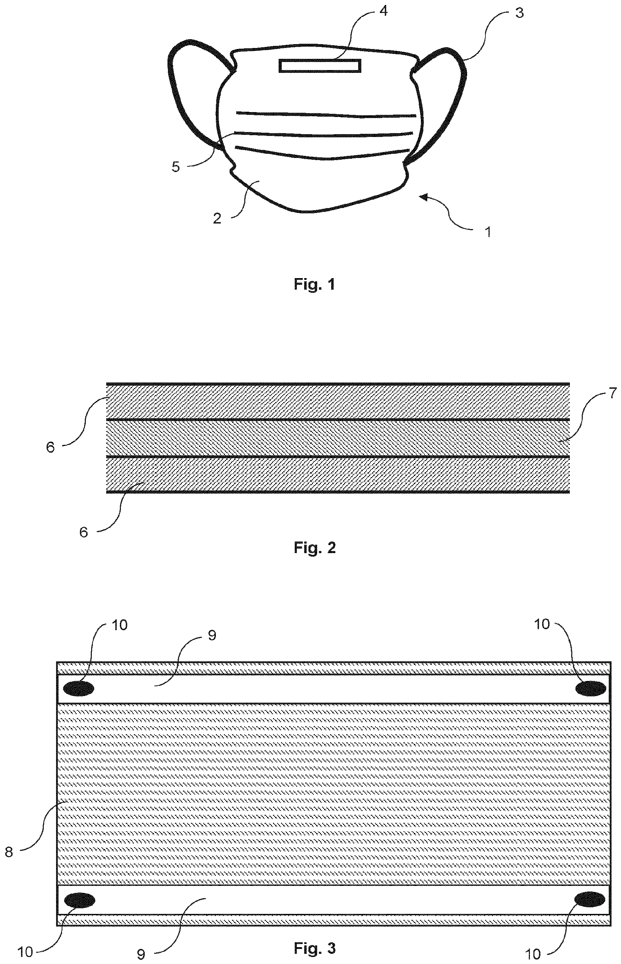

Figur 1 zeigt eine schematische Ansicht einer Atemschutzmaske 1 in Form einer Halbmaske. Es handelt sich hierbei um ein Beispiel einer medizinischen Gesichtsmaske. Die dargestellte Atemschutzmaske 1 umfasst ein Filtermaterialstück bzw. Filterteil 2. Der Zuschnitt des Filtermaterialstücks ist grundsätzlich rechteckig, kann aber auch andere insbesondere polygonale Formen annehmen.

An dem Filtermaterialstück 2 sind in dem gezeigten Beispiel zwei Befestigungsbänder 3 befestigt. Bei der Illustrierten Ausführungsform sind die Befestigungsbänder zur Befestigung an den Ohren des Trägers vorgesehen.

Zur besseren Anpassung an die Gesichtsform weist die Atemschutzmaske einen Nasensteg 4 auf, der nicht-zerstörungsfrei oder zerstörungsfrei lösbar mit dem Filtermaterialstück verbunden ist. Es kann sich insbesondere um einen in einem Kunststoffmaterial eingebetteten Draht handeln.

Eine nicht-zerstörungsfreie Verbindung besteht beispielsweise in einem Verschweißen. Dies kann entweder kontinuierlich über die gesamte Länge des Nasenstegs oder an einzelnen diskreten Punkten sein. Alternativ kann der Nasensteg mit dem Filtermaterialstück verklebt sein. Hierfür kann beispielsweise ein Hotmelt verwendet werden, was typischerweise ebenfalls zu einer nichtzerstörungsfreien Verbindung führt.

Alternativ wird der Nasensteg als separates Element dem Nutzer zur Verfügung gestellt. In diesem Fall weist der Nasensteg eine selbstklebende Oberfläche auf, die anfänglich mit einem Schutzfilm abgedeckt ist. Nach Entfernung des Schutzfilms klebt der Benutzer den Nasensteg auf den Vliesstoff auf. Je nach eingesetztem Klebematerial lässt sich ein derartiger Nasensteg auch für andere Atemschutzfilterteile wiederverwenden.

In dem Ausführungsbeispiel sind in den Filterteil bzw. das luftdurchlässige Material 2 drei Falten 5 eingebracht.

In der schematischen Querschnittsansicht der Figur 2 ist der Aufbau eines Filtermaterialstücks für eine Atemschutzmaske illustriert. Zwischen zwei Stützlagen 6 ist eine Feinfilterlage 7 angeordnet.

Die drei Lagen können insbesondere entlang der Kanten, also des Umfangs, des Filterteils 2, wie es in Figur 1 illustriert ist, miteinander verschweißt sein.

Alternativ zu dem in Figur 2 gezeigten Aufbau kann das luftdurchlässige Material der Atemschutzmaske auch weniger oder mehr Lagen umfassen. So können beispielsweise nur eine Stützlage und eine Feinfilterlage vorgesehen sein.

Die Atemschutzmasken weisen in einer Ausführungsform eine oder mehrere Lagen rPET- oder rPP-Filamente oder rPET- oder rPP-Stapelfasern auf. Zu den einzelnen Filterlagen:
Als Stützlagen 6 kommen insbesondere Spinnvlieslagen aus rPET oder rPP mit einem Flächengewicht von 5 bis 50 g/m² und einem Titer von 1 dtex bis 15 dtex in Frage. Als Rohstoff werden beispielsweise PET-Abfälle (z. B. Stanzabfälle) und sogenannte Bottleflakes, also Stücke gemahlener Getränkeflaschen verwendet. Um die unterschiedliche Färbung der Abfälle zu überdecken, ist es möglich, das Rezyklat einzufärben. Als thermisches Bindeverfahren für die Verfestigung des Spunbondvliesstoffs ist insbesondere das HELIX® (Comerio Ercole) Verfahren vorteilhaft.

Als Feinfilterlagen 7 werden eine oder mehrere Lagen Meltblown aus rPET oder rPP mit einem Flächengewicht von jeweils 5 bis 30 g/m² eingesetzt. Zusätzlich können noch eine oder mehrere Meltblown Vliesstofflagen aus rPP oder virgin PP vorhanden sein. Zumindest diese Lage(n) werden elektrostatisch aufgeladen. Die Lagen aus rPET oder rPP können ebenfalls elektrostatisch geladen werden. Dabei ist lediglich zu beachten, dass dann keine metallisierten PET-Abfälle für die Fertigung verwendet werden. Alternativ können die Meltblownfilamente auch aus Bicomponentenfasern bestehen, bei denen der Kern aus rPET oder rPP und die Hülle aus einem Kunststoff, der sich besonders gut elektrostatisch aufladen lässt (z. B. virgin PP, PC, PET oder rPP), gebildet wird.

Die Filamente oder Stapelfasern können auch aus Bikomponentenmaterialien bestehen, bei denen der Kern aus rPET oder rPP und die Hülle aus einem Kunststoff, der sich besonders gut elektrostatisch aufladen lässt (z. B. virgin PP, PC, PET oder rPP) gebildet wird.

Konkret kann das Filtermaterialstück aus einem dreilagigen luftdurchlässigen Material bestehen. Dabei ist zwischen zwei Spunbondvliesstofflagen aus rPET mit einer Grammatur von 20 g/m² eine Meltblownvliesstofflage mit einer Grammatur von 20 g/m² angeordnet. Das so erhaltene SMS kann durch eine entlang der Kanten umlaufende Schweißnaht ultraschallverschweißt sein.

Das Meltblown kann durch Zusatz von Additiven und einer Wasserstrahlbehandlung (Hydrocharging), wie sie beispielsweise in der WO 97/07272 beschrieben ist, elektrostatisch geladen werden.

Alternativ kann das Meltblown eine Grammatur von 25 g/m² aufweisen und mittels einer Corona-Behandlung elektrostatisch geladen worden sein.

Das Meltblown kann aus Bikomponentenfasern bestehen, die einen Kern aus rPP und einen Mantel aus virgin PP aufweisen. Alternativ kann der Mantel auch rPP aufweisen. Dabei kann das Meltblown beispielsweise mit einer Meltblown-Maschine der Firma Hills Inc., West Melbourne, FL, USA, produziert werden. Hiermit lassen sich hohe Rezyklatanteile trotz elektrostatischer Aufladung verwirklichen.

Das SMS kann gekreppt sein. Hierfür kann insbesondere das Micrex-Mikro-Krepp-Verfahren eingesetzt werden. Rein beispielhaft wird auf die WO 2007/079502 verwiesen. Die damit erzielte Erhöhung der Oberfläche führt nicht nur zu einer weicheren Anmutung, es lässt sich auch besser der Gesichtsform anpassen und nimmt Feuchtigkeit besser auf.

Das mehrlagige luftdurchlässige Material kann mittels eines zweistufigen Verfahrens - wie oben beschrieben - verbunden werden. Dabei werden eine, mehrere oder alles Vliesstofflagen bereichsweise (im späteren Schweißbereich) vorverdichtet und dann verschweißt.

Vergleichsversuche haben die Vorzüge eines derartigen zweistufigen Verbindens gezeigt. Dabei wurde ein dreilagiges Material verwendet, bei dem zwischen zwei Spunbondvliesstofflagen mit einem Flächengewicht von 35 g/m² eine Meltblownvliesstofflage mit einem Flächengewicht von 33 g/m² angeordnet wurde. Das dreilagige Material wurde als ein einziges Vliesstoffmaterialstück für Herstellung der Maske verwendet; es wurden also nicht zwei separate Vliesstoffmaterialien verwendet.

In diesem Vergleichsversuch bestanden alle Lagen aus virgin PP, entsprechendes gilt aber auch für rezyklierte Materialien. Diese drei Lagen wurden zunächst mittels Druck im späteren Schweißbereich vorverdichtet, wobei das Vorverdichten nur auf einer Seite des anschließend zu faltenden und übereinanderzulegenden Materialstücks durchgeführt wurde.

Danach erfolgte das eigentliche Verschweißen mit den nachfolgend angegebenen Parametern. Beim Verschweißen lagen zwei Teilbereiche des zusammenhängenden Vliesstoffmaterials übereinander, wobei in dem oben oder unten liegenden Teilbereich (Vliesstoffmaterial) ein Bereich vorverdichtete war, in dem darunter bzw. darüber liegenden Teil, also in dem zweiten Vliesstoffmaterial, hingegen nicht.

| | | | | |
|---|---|---|---|---|
| Schweißzeit [ms] | 53 | 60 | 70 | 80 |
| Energieeintrag[J] | 30 | 40 | 50 | 60 |
| Druck [bar] | 1,8 | 1,8 | 1,8 | 1,8 |
| Festigkeit [N] | 14,2 | 18,1 | 27,8 | 54,4 |

Der Durchmesser des Vorschubzylinders der Sonotrode, auf den sich die Druckangabe bezieht, beträgt dabei 80 mm.

Man erkennt, dass schon bei einer Schweißzeit von 53 ms die Reißfestigkeit der Schweißverbindung bei 14,2 N liegt, was fast den für Atemschutzmasken typischerweise geforderten 15 N entspricht. Bereits mit 60 ms Schweißzeit und einem entsprechenden Energieeintrag von 40 J liegt man bei über 18 N Reißfestigkeit.

Im Vergleich dazu liegt die Schweißzeit für das Laminat ohne das Vorverdichten mit höherem Energieeintrag bei 320 ms:

| | |
|---|---|
| Schweißzeit [ms] | 320 |
| Energieeintrag[J] | 140 |
| Druck [bar] | 2 |
| Festigkeit [N] | 18,2 |

Figur 3 zeigt eine schematische Draufsicht eines luftdurchlässigen Materials 8, das dem Filterteil 2 der Figur 1 entspricht. Im Vergleich mit der Figur 1 zeigt Figur 3 jedoch die Rückseite des Filterteils, also die einem Benutzer zugewandte Seite.

In dem illustrierten Beispiel sind an gegenüberliegenden Kanten des luftdurchlässigen Materials 8 jeweils ein Befestigungsband 9 angeordnet, dass sich über die gesamte Kantenlänge erstreckt. Die Befestigungsbänder können somit bei der Fertigung des Filterteils mit dem luftdurchlässigen Material mitlaufen und gemeinsam mit diesem geschnitten werden. Die Verbindung von Befestigungsband und luftdurchlässigem Material erfolgt in dem gezeigten Beispiel über jeweils einen Schweißpunkt 10 an den einander gegenüberliegenden Endbereichen jedes Befestigungsbands 9.

Für das Befestigungsband wird beispielsweise ein TPU-Laminat aus einer TPU-Folie mit einer Dicke von 20 µm bis 100 µm und einem TPU-Meltblown (Grammatur: 20 bis 80 g/m²) verwendet, das mit dem Filtermaterialstück verschweißt ist. Das eingesetzte TPU wird dabei jeweils in Form eines Kunststoffrezyklats verwendet. Für das Verschweißen lässt sich für die Erzielung einer hohen Festigkeit das in den europäischen Patentanmeldungen EP 18213001.3 und EP 19180533.2 in einem anderen technischen Gebiet offenbarte Verfahren einsetzen.

Das nach dem Vistamaxx-Verfahren hergestellte PP-Material kann im Meltblown- oder Foliengieß- oder Blasfolien-Verfahren hergestellt sein und - wie beim TPU-Laminat beschrieben - laminiert worden sein.

## Patentansprüche

1. Atemschutzmaske umfassend ein Filtermaterialstück aus einem luftdurchlässigen Material und wenigstens ein Befestigungsband,
wobei das luftdurchlässige Material mindestens eine Lage eines Vliesstoffes, der Fasern umfasst oder hieraus besteht, die aus einem rezyklierten Kunststoff oder mehreren rezyklierten Kunststoffen gebildet sind, und
wobei das wenigstens eine Befestigungsband zur Befestigung der Atemschutzmaske am Kopf ausgebildet ist.

2. Atemschutzmaske nach Anspruch 1, wobei der rezyklierte Kunststoff ausgewählt ist aus der Gruppe bestehend aus rezyklierten Polyestern, insbesondere rezykliertem Polyethylenterephthalat (rPET), rezykliertem Polybutylenterephthalat (rPBT), rezyklierter Polymilchsäure (rPLA), rezykliertem Polyglycolid und/oder rezykliertem Polycaprolacton; rezyklierten Polyolefinen, insbesondere rezykliertem Polypropylen (rPP), rezykliertem Polyethylen und/oder rezykliertem Polystyrol (rPS); rezykliertem Polyvinylchlorid (rPVC), rezyklierten Polyamiden sowie Mischungen und Kombinationen hiervon.

3. Atemschutzmaske nach einem der vorhergehenden Ansprüche, wobei die Lage des Vliesstoffes, der Fasern umfasst oder hieraus besteht, die aus einem rezyklierten Kunststoff oder mehreren rezyklierten Kunststoffen gebildet sind, elektrostatisch aufgeladen ist.

4. Atemschutzmaske nach einem der vorhergehenden Ansprüche, wobei das luftdurchlässige Material mehrlagig aufgebaut ist, wobei mindestens eine, mehrere oder sämtliche der Lagen einen Vliesstoff umfassen oder hieraus gebildet sind, wobei der Vliesstoff bzw Fasern umfasst oder hieraus besteht, die einen rezyklierten Kunststoff oder mehrere rezyklierten Kunststoffe umfassen oder daraus gebildet sind.

5. Atemschutzmaske nach einem der vorhergehenden Ansprüche, wobei das luftdurchlässige Material mindestens eine Stützlage und mindestens eine Feinfilterlage umfasst,
wobei mindestens eine, mehrere oder sämtliche der Stützlagen und/oder mindestens eine, mehrere oder sämtliche der Feinfilterlagen Vliesstoffe sind, die einen rezyklierten Kunststoff oder mehrere rezyklierte Kunststoffen umfassen oder daraus gebildet sind.

6. Atemschutzmaske nach vorhergehendem Anspruch, wobei
a) jede Stützlage ein Spinnvlies ist, vorzugsweise mit einer Grammatur von 5 bis 80 g/m², weiter bevorzugt von 10 bis 50 g/m², weiter bevorzugt von 15 bis 30 g/m² und/oder vorzugsweise mit einem Titer der das Spinnvlies bildenden Fasern im Bereich von 0,5 dtex bis 15 dtex,
b) das luftdurchlässige Material 1 bis 3 Stützlagen umfasst,
c) im Falle des Vorhandenseins mindestens zweier Stützlagen die Gesamtgrammatur der Summe aller Stützlagen 10 bis 200 g/m², bevorzugt 15 bis 150 g/m², weiter bevorzugt 20 bis 100 g/m², weiter bevorzugt 30 bis 90 g/m², insbesondere 40 bis 70 g/m² beträgt, und/oder
d) sämtliche Stützlagen aus einem rezyklierten Kunststoff oder mehreren rezyklierten Kunststoffen, insbesondere aus rPET oder rPP, gebildet sind.

7. Atemschutzmaske nach einem der beiden vorhergehenden Ansprüche, wobei
a) jede Feinfilterlage ein Extrusionsvliesstoff, insbesondere ein Meltblown-Vliesstoff ist, vorzugsweise mit einer Grammatur von 10 bis 80 g/m², insbesondere 15 bis 50 g/m², insbesondere 20 bis 40 g/m²,
b) das luftdurchlässige Material 1 bis 5 Feinfilterlagen umfasst,
c) im Falle des Vorhandenseins mindestens zweier Feinfilterlagen die Gesamtgrammatur der Summe aller Feinfilterlagen 10 bis 80 g/m², insbesondere 15 bis 50 g/m², insbesondere 20 bis 40 g/m² beträgt,
d) mindestens eine, bevorzugt sämtliche Feinfilterlagen aus einem rezyklierten Kunststoff oder mehreren rezyklierten Kunststoffen, insbesondere aus rPET oder rPP, gebildet sind und/oder
e) mindestens eine, bevorzugt sämtliche Feinfilterlagen elektrostatisch aufgeladen sind.

8. Atemschutzmaske nach einem der vorhergehenden Ansprüche, wobei das luftdurchlässige Material mehrlagig ausgebildet ist mit einer Lagenfolge:
eine Stützlage, eine oder zwei Feinfilterlagen sowie eine weitere Stützlage.

9. Atemschutzmaske nach einem der vorhergehenden Ansprüche, wobei das luftdurchlässige Material eine Meltblown-Lage aus Bikomponentenfasern mit einem Kern/Mantel-Aufbau umfasst, wobei der Kern aus rPP und der Mantel aus virgin PP gebildet ist, oder wobei der Kern aus rPP und der Mantel aus rPP gebildet ist.

10. Atemschutzmaske nach einem der vorhergehenden Ansprüche, wobei das wenigstens eine Befestigungsband einen rezyklierten Kunststoff umfasst oder aus einem oder mehreren rezyklierten Kunststoffen gebildet ist.

11. Atemschutzmaske nach Anspruch 10, wobei das wenigstens eine Befestigungsband mehrlagig aufgebaut ist, wobei das Befestigungsband eine Lage aus einer Folie und eine Lage eines Meltblowns umfasst oder hieraus besteht.

12. Atemschutzmaske nach einem der vorhergehenden Ansprüche, wobei das Befestigungsband ein thermoplastisches Polymer, insbesondere ein rezykliertes thermoplastisches Polymer, umfasst oder hieraus gebildet ist.

13. Atemschutzmaske nach Anspruch 12, wobei das thermoplastische Polymer ein thermoplastisches Elastomer ist.

14. Atemschutzmaske nach einem der vorhergehenden Ansprüche, wobei der Gewichtsanteil aller rezyklierten Materialien, bezogen auf das Gesamtgewicht der Atemschutzmaske mindestens 60 %, insbesondere mindestens 70 %, insbesondere mindestens 80 %, insbesondere mindestens 90 %, insbesondere mindestens 95 % beträgt.

15. Verwendung eines rezyklierten Kunststoffs, insbesondere in Form eines Vliesstoffes und/oder eines Faservlieses für eine Atemschutzmaske.
